# EUROPEAN PATENT APPLICATION

(11) **EP 4 734 238 A1**
(43) Date of publication of application: **29.04.2026**
(21) Application number: 25203283.4
(22) Date of filing: 19.09.2025
(51) Int. Cl.: H01M 50/103, H01M 50/147, H01M 50/15

(54) **BATTERY AND BATTERY MANUFACTURING METHOD**

(30) Priority: 25.10.2024 JP 2024188522
(71) Applicant: TOYOTA JIDOSHA KABUSHIKI KAISHA, Toyota-shi, Aichi-ken 471-8571 (JP)
(72) Inventor: Shinya, ISHIKAWA, Toyota-shi, Aichi-ken,, 471-8571 (JP)
(74) Representative: Winter, Brandl - Partnerschaft mbB

(57) **Abstract**

A battery including an external cladding that includes a bottom wall having a rectangular flat plate shape and a pair of main body walls respectively integrally provided upright from long edges of the bottom wall, and includes jutting-out portions that jut out in directions approaching each other from end portions of the pair of main body walls on the opposite side to the bottom wall, an electrode assembly housed in the external cladding, and a lid that is formed in a protrusion shape including a narrow width portion and a wide width portion when viewed in cross-section from a direction along the long edges of the bottom wall, such that the narrow width portion is clamped by the jutting-out portions.

## Description

### BACKGROUND

### Technical Field

The present disclosure relates to a battery and a battery manufacturing method.

### Related Art

Sealed batteries that have been sealed by welding a lid to an opening at an upper portion of a can of a battery are known (see, for example, Japanese Patent Application Laid-Open (JP-A) No. 2001-167740). Along edge leading end portion of the opening end of the battery can of such a sealed battery includes a section that extends past an upper portion of the lid, and the battery is sealed by bending and then welding the section extending past the upper portion of the lid inwards after the lid has been fitted to the opening end.

### SUMMARY

However, when a configuration such as described above is adopted, a recess/protrusion (step section) is formed between the lid and the bent portion of the battery can, serving as an external cladding, with a concern that sealing might be impaired by this recess/protrusion (step section).

Namely, in a configuration such as described above, there is a concern that problems might arise after the external cladding and the lid have been assembled, and the assemblability thereof can hardly be described as good. Moreover, when cooling a battery by contacting a cooling member with the lid, contacting the cooling member with the lid is difficult when such a recess/protrusion (step section) is present.

An object of the present disclosure is accordingly to obtain a battery capable of improving assemblability between external cladding and a lid, and a method to manufacture a battery of the same.

In order to achieve the above object, a battery of a first aspect includes an external cladding, an electrode assembly, and a lid. The external cladding includes a bottom wall having a rectangular flat plate shape and a pair of main body walls respectively integrally provided upright from long edges of the bottom wall, and that includes jutting-out portions that jut out in directions approaching each other from end portions of the pair of main body walls at an opposite side to the bottom wall. The electrode assembly is housed in the external cladding. The lid is formed in a protrusion shape including a narrow width portion and a wide width portion when viewed in cross-section from a direction along the long edges of the bottom wall, such that the narrow width portion is clamped by the jutting-out portions.

In the battery of the first aspect, the external cladding housing the electrode assembly includes the rectangular flat plate shaped bottom wall and the pair of main body walls respectively integrally provided upstanding from long edges of the bottom wall, and includes the jutting-out portions that jut out in directions approaching each other provided to end portions of the pair of main body walls on the opposite side to the bottom wall. The lid is formed with the "protrusion" shape including the narrow width portion and the wide width portion when viewed in cross-section from directions along the long edges of the bottom wall of the external cladding, such that the narrow width portion is clamped by the jutting-out portions of the external cladding. This means assembly of the external cladding to the lid is strong, and the strength of such assembled portions is improved. Namely, the assemblability of the external cladding and the lid is improved.

Moreover, a battery of a second aspect is the battery of the first aspect, wherein external faces of the narrow width portion and external faces of the jutting-out portions lie in the same single plane.

In the battery of the second aspect, the external faces of the narrow width portion and external faces of the jutting-out portions lie in the same single plane. This means that there is less concern of impairment to the assemblability of the external cladding to the lid than, for example, cases in which the external faces of the jutting-out portions project further than the external faces of the narrow width portion. Moreover, a cooling member can be easily contacted with a lid when cooling the battery by contacting the cooling member against the lid.

A battery of a third aspect is the battery of either the first aspect or the second aspect, wherein jutting-out lengths of the jutting-out portions in the approach direction are the same as each other.

In the battery of the third aspect, the jutting-out lengths of the jutting-out portions in direction in which the jutting-out portions jut out to approach each other are the same as each other. This means that assembly of the external cladding to the lid achieves greater strength than cases in which the jutting-out lengths of the jutting-out portions in the mutually approaching directions are not the same as each other, and the assemblability of external cladding and the lid is further improved.

Moreover, a battery of a fourth aspect is the battery of any one of the first to the third aspects, wherein a thickness of the wide width portion is thicker than a thickness of the narrow width portion.

In the battery of the fourth aspect, the thickness of the wide width portion is thicker than the thickness of the narrow width portion. This means that damage to the electrode assembly is prevented when welding the lid to the external cladding even with a thin plate thickness of the external cladding.

Moreover, a battery of a fifth aspect is the battery of any one of the first to the fourth aspects, wherein the electrode assembly includes a terminal portion that is capable of closing off an opening of the external cladding provided at a bottom wall short edge side of the external cladding.

In the battery of the fifth aspect, the electrode assembly includes the terminal portion that is capable of closing off the opening of the external cladding provided at the bottom wall short edge side. This means that the opening of the external cladding can be closed off merely by inserting the electrode assembly into the external cladding, thereby facilitating assembly of the lid to the external cladding. Namely, the assemblability of the external cladding and the lid is improved.

A manufacturing method of a battery of a sixth aspect is a manufacturing method of the battery of any one of the first to the fifth aspects. The manufacturing method includes an opening process of moving the jutting-out portions of the external cladding in directions to separate from each other and widening the end portions, an electrode assembly insertion process of inserting the electrode assembly into the external cladding that has the end portions widened, a lid insertion process of inserting the lid into the end portions of the external cladding that has the electrode assembly inserted therein, and a sealing process of moving the jutting-out portions in a direction to approach each other to clamp the narrow width portion of the lid with the jutting-out portions, and sealing the end portions of the external cladding.

In the battery manufacturing method of the sixth aspect, the jutting-out portions of the external cladding are moved in directions to separate from each other and the end portions of the pair of main body walls on the opposite side to the bottom wall are widened, the electrode assembly is inserted into the external cladding having widened end portions, and the lid is inserted into the end portions of the external cladding having the electrode assembly inserted therein. The jutting-out portions are moved in directions to approach each other and the width portion of the lid is clamped by the jutting-out portions, and the end portions of the external cladding are sealed. This means that the assembly of the external cladding to the lid is strong, and the strength of these assembled portions is improved. Namely, assemblability of the external cladding and the lid is improved.

As described above, the present disclosure improves the assemblability of the external cladding and the lid.

### BRIEF DESCRIPTION OF THE DRAWINGS

An exemplary embodiment of the present disclosure will be described in detail based on the following figures, wherein:
Fig. 1 is a schematic perspective view illustrating a battery according to an exemplary embodiment;
Fig. 2 is a schematic perspective view illustrating an electrode assembly of a battery according to an exemplary embodiment;
Fig. 3 is a schematic perspective view illustrating external cladding of a battery according to the present exemplary embodiment;
Fig. 4 is a schematic perspective view illustrating a lid of the battery according to the present exemplary embodiment;
Fig. 5 is a schematic cross-section illustrating an internal structure of a battery according to the present exemplary embodiment; and
Fig. 6A to Fig. 6E are schematic process diagrams illustrating a manufacturing method of a battery according to the present exemplary embodiment.

### DETAILED DESCRIPTION

Detailed description follows regarding an exemplary embodiment according to the present disclosure, with reference to the drawings. Note that for ease of explanation, where appropriately indicated in the drawings, an arrow UP indicates an upward direction of the battery, an arrow FR indicates a forward direction of the battery, and an arrow LH indicates a left direction of the battery. This means that in the following explanation, unless explicitly stated otherwise, reference to up and down, front and rear, and left and right directions indicate the up and down, front and rear, and left and right directions of the battery, however there is no particular limitation to these directions.

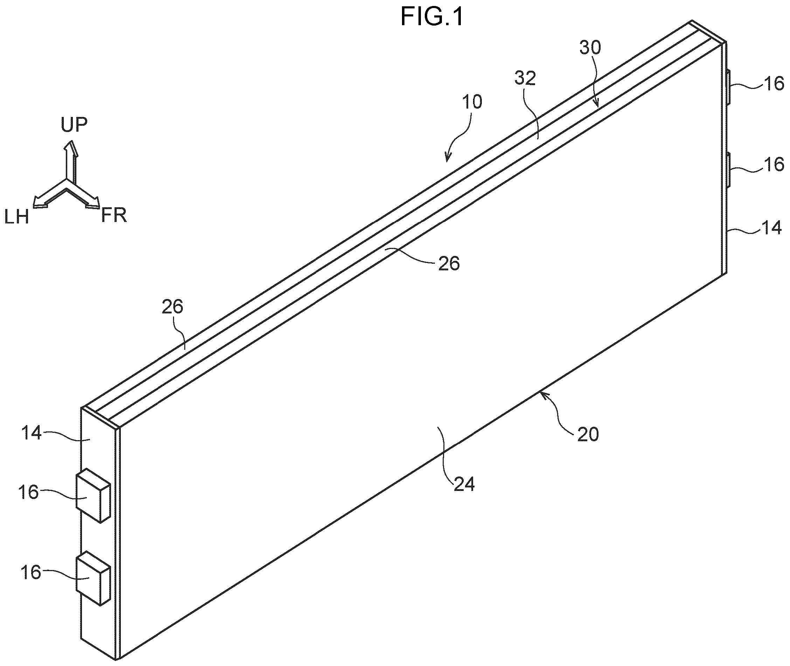

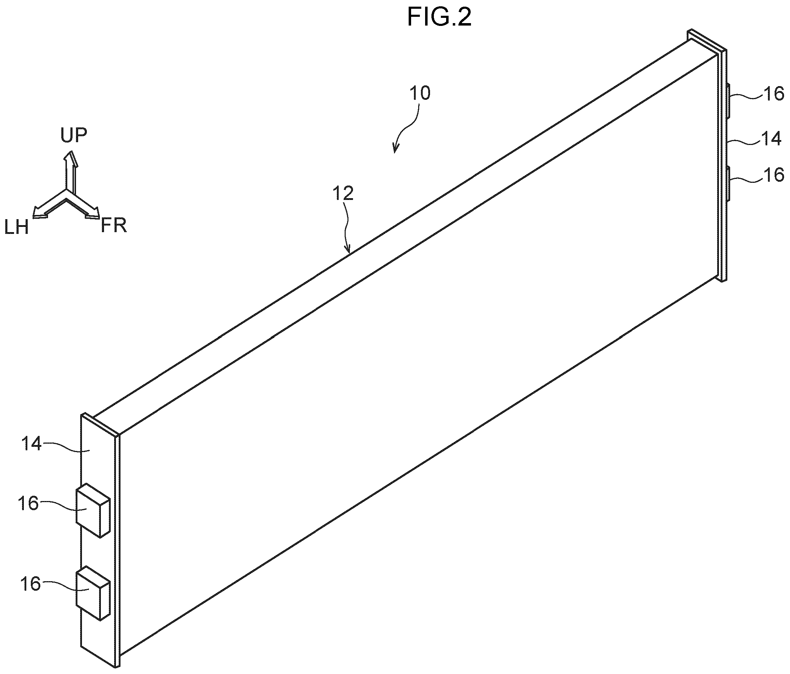

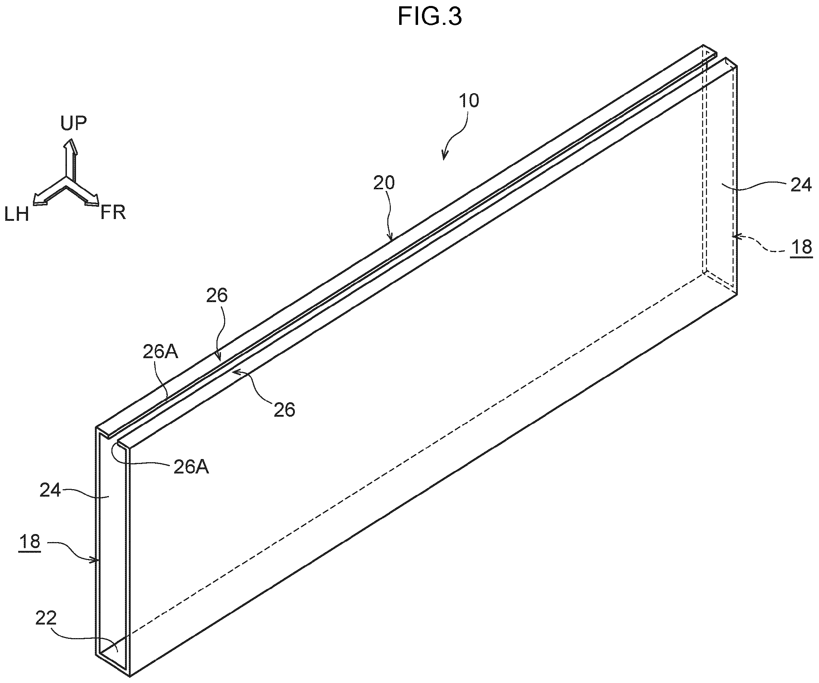

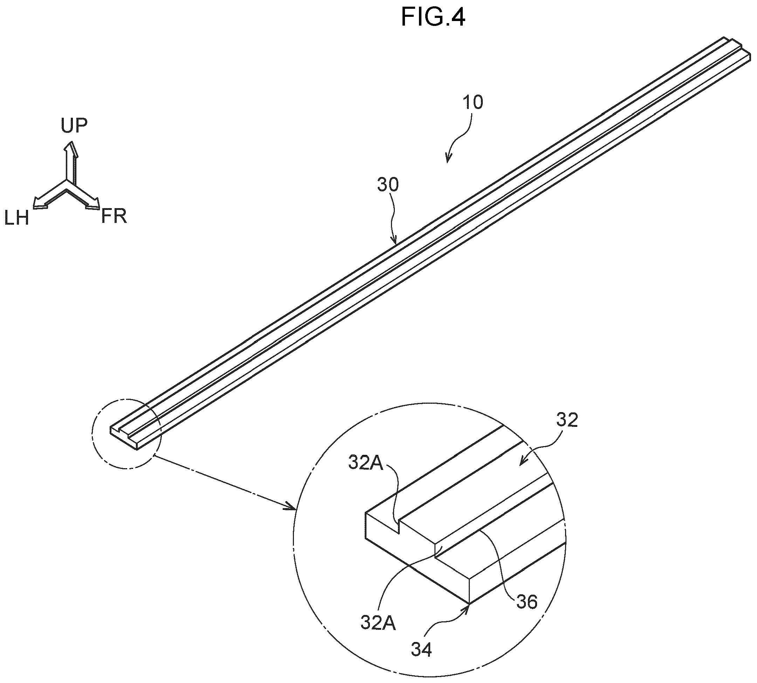

As illustrated in Fig. 1, a battery 10 according to the present exemplary embodiment is a solid-state battery that includes an electrode assembly 12 as illustrated in Fig. 2, external cladding 20, as illustrated in Fig. 3, for housing the electrode assembly 12 therein with an upper end of the external cladding 20 housing the electrode assembly 12 (the end on the opposite side thereof to a bottom wall 22, described later) being closed off, and the lid 30 illustrated in Fig. 4. Note that the external cladding 20 and the lid 30 are formed from a metal such as an aluminum alloy.

As illustrated in Fig. 2, the electrode assembly 12 is formed in a rectangular flat plate shape having a thickness direction aligned with the front-rear direction. Metal terminal portions 14 are respectively pre-attached by welding or the like to the left and right sides of the electrode assembly 12. The terminal portions 14 are formed slightly larger all round than the left and right sides of the electrode assembly 12 and have a size that is able to close off openings 18, described later, of the external cladding 20. Note that a pair of electrode terminals 16 that have a specific projection height and form a substantially square shape when viewed along the left-right direction are integrally formed to outside faces of each of the terminal portions 14, with the electrode terminals 16 spaced apart from each other at a specific spacing in the height direction.

As illustrated in Fig. 3, the external cladding 20 includes a rectangular flat plate shaped bottom wall 22 having a length direction along the left-right direction, and a pair of main body walls 24 that are respectively integrally provided upstanding from long edges of the bottom wall 22. Note that the openings 18 are formed at bottom wall 22 short edge sides of the external cladding 20. Jutting-out portions 26 are integrally formed to upper end portions of the pair of main body walls 24 (i.e. to end portions on the opposite side thereof to the bottom wall 22) so as to jut out in respective directions approaching each other.

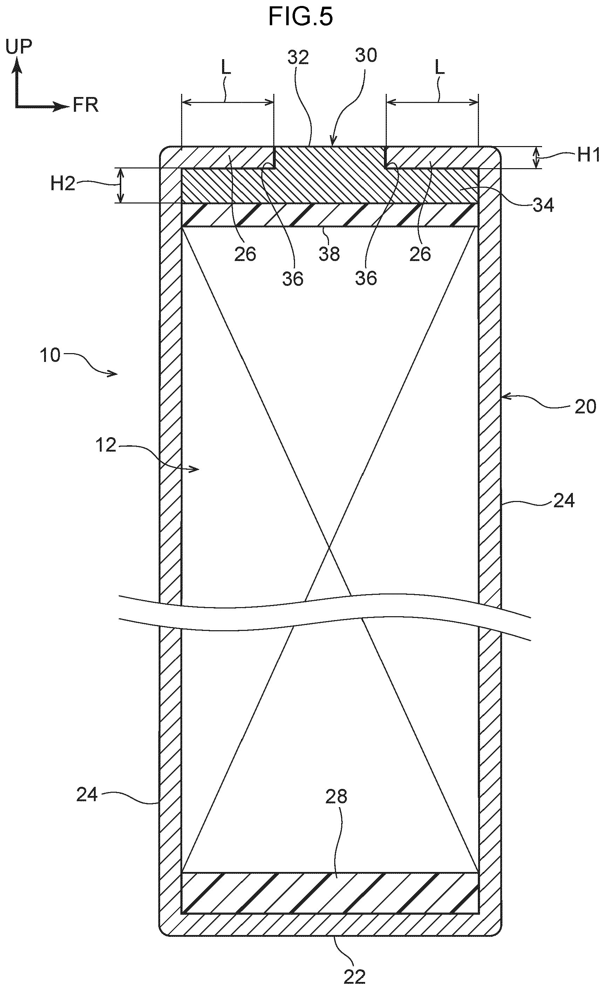

Respective jutting-out lengths L in the approach directions of the jutting-out portions 26 are the same as each other (see Fig. 5). Namely, a configuration is adopted in which a narrow width portion 32, described later, of the lid 30 for sealing the upper end portions of the external cladding 20 is disposed at a front-rear direction central portion of the upper end portion. Moreover, as illustrated in Fig. 5, a heat transfer sheet 28 formed with a specific thickness from a silicone resin member is provided stuck to substantially the entire surface of the internal face (upper face) of the bottom wall 22 of the external cladding 20.

As illustrated in Fig. 4, the lid 30 is, when viewed in cross-section in a direction along the long edges of the bottom wall 22 of the external cladding 20, formed with a "protrusion" shape having a narrow width portion 32 and a wide width portion 34 above and below. As illustrated in Fig. 5, a width along a front-rear direction of the wide width portion 34 configuring the lower side of the lid 30 is formed the same as a spacing between the pair of main body walls 24, and the narrow width portion 32 configuring the upper side of the lid 30 is formed at a width direction (front-rear direction) central portion of the wide width portion 34.

Namely, a configuration is adopted in which half of a difference between the width of the wide width portion 34 and the width of the narrow width portion 32 is the same as the jutting-out length L of the jutting-out portions 26, and the narrow width portion 32 is clamped from the front and rear directions by the jutting-out portions 26 when the lid 30 is installed to the upper end portions of the external cladding 20 (i.e. between the upper end portions of the pair of the main body walls 24), see Fig. 5.

In other words, end faces 26A (see Fig. 3) opposing each of the jutting-out portions 26 are configured so as to respectively abut side faces 32A (see Fig. 4) of the narrow width portion 32 that face in the front-rear direction, such that the jutting-out portions 26 are fitted into a step section 36 formed by the narrow width portion 32 and the wide width portion 34. Then, from this state, a sealed configuration is achieved for the upper end portions by the lid 30 being joined to the upper end portions of the external cladding 20 by welding.

Note that the upper face (external face) of the narrow width portion 32 and the upper face (external face) of the jutting-out portions 26 are configured so as to lie in the same single plane (see Fig. 5). Namely, a thickness (height) H1 of the narrow width portion 32 is the same as a plate thickness of the jutting-out portions 26 (the external cladding 20). Moreover, a thickness (height) H2 of the wide width portion 34 is formed thicker than the thickness H1 of the narrow width portion 32 (H2 > H1). Moreover, as illustrated in Fig. 5, a heat transfer sheet 38 formed with a specific thickness from a silicone resin member is provided stuck to substantially the entire surface of the bottom face of the wide width portion 34 (to the internal face of the lid 30).

Operation (a manufacturing method) of the battery 10 according to the present exemplary embodiment configured as described above will now be described.

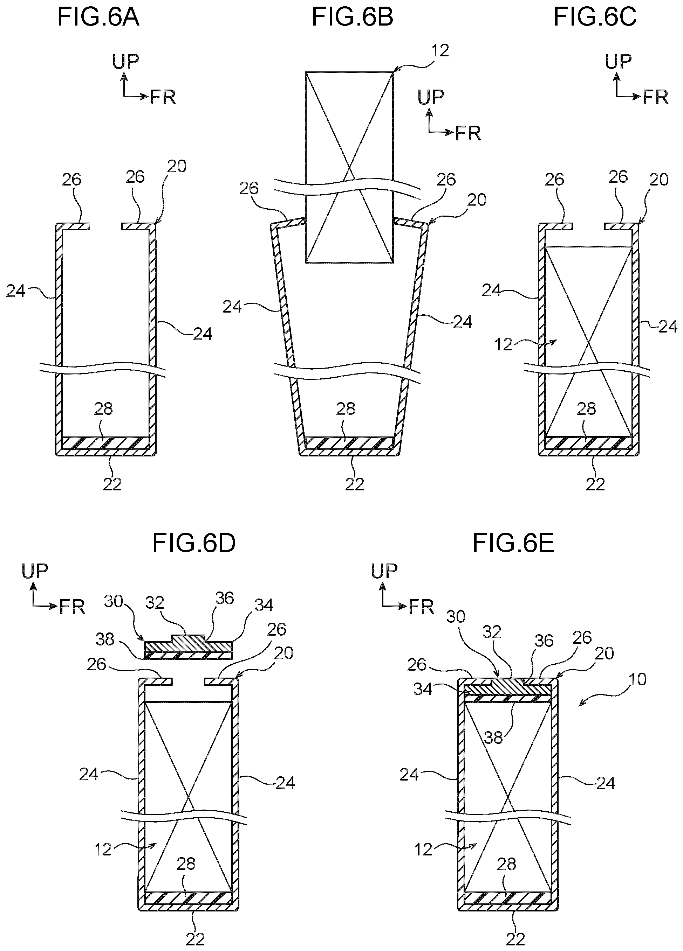

First, as illustrated in Fig. 6A, the heat transfer sheet 28 is stuck to the internal face of the bottom wall 22 of the external cladding 20. Then, as illustrated in Fig. 6B, the jutting-out portions 26 of the external cladding 20 are moved in the direction of separation from each other so as to widen the external cladding 20 (an opening process), and the electrode assembly 12 is inserted from above into the external cladding 20 that has been widened at the upper end portion thereof (an electrode assembly insertion process). Fig. 6C illustrates a state in which the electrode assembly 12 has been inserted (housed) in the external cladding 20.

Namely, as illustrated in Fig. 6D, the lid 30 is inserted into the upper end portions of the external cladding 20 having the electrode assembly 12 inserted (housed) therein (a lid insertion process). Note that the heat transfer sheet 38 has been pre-stuck to the bottom face of the wide width portion 34 of the lid 30. Moreover, although not illustrated in the drawings, at this time too, the upper end portions of the external cladding 20 are widened by moving the jutting-out portions 26 of the external cladding 20 in directions to separate from each other, as illustrated in Fig. 6B, and the lid 30 is inserted therein.

In this manner, the jutting-out portions 26 are moved in directions to approach each other after the lid 30 has been inserted at the upper end portions of the external cladding 20 (upper side of the electrode assembly 12), the narrow width portion 32 on the lid 30 is clamped by the jutting-out portions 26 as illustrated in Fig. 6E, and the upper end portions of the external cladding 20 are sealed (a sealing process). Namely, the lid 30 is joined (sealed) to the upper end portions of the external cladding 20 by welding in a state in which the respective end faces 26A of the jutting-out portions 26 (see Fig. 3) have been abutted against each of the side faces 32A of the narrow width portion 32 (see Fig. 4).

Note that at this time, the terminal portions 14 (see Fig. 1 and Fig. 2) provided at both left and right sides of the electrode assembly 12 are also joined by welding to peripheral portions at the left and right sides of the bottom wall 22 and of the main body walls 24, and to end portions at the left and right sides of the lid 30, so as to seal the openings 18 of the external cladding 20. The battery 10 as illustrated in Fig. 1 is manufactured in this manner.

Moreover, the battery 10 configured as described above achieves strong assembly of the external cladding 20 to the lid 30, enabling the strength of these assembled portions to be improved. Namely, assemblability of the external cladding 20 and the lid 30 can be improved.

Moreover, the upper face of the narrow width portion 32 of the lid 30 and the upper face of the jutting-out portions 26 of the external cladding 20 lie in the same single plane, and so there is less concern that assembly of the external cladding 20 to the lid 30 might be impeded as a result of jutting-out portions projecting out therefrom (omitted in the drawings) (less concern that a force might be imparted in a direction to separate the jutting-out portions from each other) than, for example, cases in which the upper faces of the jutting-out portions 26 project further upward than the upper face of the narrow width portion 32.

Moreover, when the upper face of the narrow width portion 32 of the lid 30 and the upper face of the jutting-out portions 26 of the external cladding 20 both lie in the same single plane and a cooling member (omitted in the drawings) is brought into contact with the lid 30 to cool the battery 10 (heat dissipation), the cooling member is readily brought into contact with the lid 30 (the upper face of the narrow width portion 32). This accordingly enables the battery 10 to be cooled with good efficiency.

Moreover, the battery 10 is configured with the electrode assembly 12 retained clamped from above and below by the heat transfer sheet 28 provided to the internal face of the bottom wall 22 of the external cladding 20, and the heat transfer sheet 38 provided to the bottom face of the wide width portion 34 of the lid 30, thereby enabling the electrode assembly 12 to be effectively brought into close contact with, and fixed to, the external cladding 20.

Moreover, the jutting-out portions 26 of the external cladding 20 each have the same jutting-out length L in the direction approaching each other. This means that assembly of the jutting-out portions 26 of the external cladding 20 to the lid 30 from the front and rear directions is even stronger than cases in which the approach direction jutting-out lengths L of the jutting-out portions 26 of the external cladding 20 are not the same as each other, thereby enabling an even greater improvement in the strength of these assembled portions. Namely, the assemblability of the external cladding 20 and the lid 30 can be further improved.

Moreover, in the lid 30, the thickness H2 of the wide width portion 34 is formed thicker than the thickness H1 of the narrow width portion 32 (H2 > H1). This means that the electrode assembly 12 can be prevented from being damaged when the lid 30 is welded to the external cladding 20 even with a thin plate thickness of the external cladding 20 (and in particular of the jutting-out portions 26).

Moreover, the electrode assembly 12 includes the terminal portions 14 that are able to close off the openings 18 of the external cladding 20. In other words, attachment of the terminal portions 14 to the electrode assembly 12 by welding can be executed prior to insertion of the electrode assembly 12 into the external cladding 20. This means that the generation of foreign mater and fumes can be suppressed compared to cases in which terminal portions 14 are attached to the electrode assembly 12 by welding after the electrode assembly 12 has been inserted into the external cladding 20.

Moreover, due to the electrode assembly 12 already including in advance the terminal portions 14 capable of closing the openings 18 of the external cladding 20, the openings 18 can be closed off merely by inserting the electrode assembly 12 into the external cladding 20. Namely, this facilitates positioning and assembly of the lid 30 to the external cladding 20 in order to join the terminal portions 14 to the lid 30 by welding, enabling the assemblability of the external cladding 20 and the lid 30 to be improved.

Although the battery 10 according to the present exemplary embodiment has been described above based on the drawings, the battery 10 according to the present exemplary embodiment is not limited to that illustrated, and appropriate design changes may be made within a range not departing from the spirit of the present disclosure. For example, a length of the battery 10 in the left-right direction, a length (height) thereof in the height direction, and a length thereof (thickness) in the front-rear direction, are not limited to the illustrated lengths.

Moreover, the width (length) of the narrow width portion 32 of the lid 30 along the front-rear direction and the jutting-out length L of the jutting-out portions 26 of the external cladding 20 are depicted exaggerated in each of the drawings, and are not limited to the illustrated lengths. Thus, for example, the width (length) of the narrow width portion 32 along the front-rear direction may be a width (length) two or more times the jutting-out length L of the jutting-out portions 26.

## Claims

1. A battery (10), comprising:
an external cladding (20) that includes a bottom wall (22) having a rectangular, flat plate shape and a pair of main body walls (24) respectively integrally provided upright from long edges of the bottom wall, and that includes jutting-out portions (26) that jut out in directions approaching each other from end portions, of the pair of main body walls, at an opposite side to the bottom wall;
an electrode (12) assembly that is housed in the external cladding; and
a lid (30) that is formed in a protrusion shape including a narrow width portion (32) and a wide width portion (34) when viewed in cross-section from a direction along the long edges of the bottom wall, such that the narrow width portion is clamped by the jutting-out portions.

2. The battery of claim 1, wherein external faces of the narrow width portion and external faces of the jutting-out portions lie in the same single plane.

3. The battery of claim 1, wherein jutting-out lengths of the jutting-out portions in a direction in which the jutting-out portions jut out to approach each other are the same as each other.

4. The battery of claim 1, wherein a thickness of the wide width portion is thicker than a thickness of the narrow width portion.

5. The battery of claim 1, wherein the electrode assembly includes a terminal portion (14) that is capable of closing off an opening (18) of the external cladding provided at a bottom wall short edge side of the external cladding.

6. A manufacturing method of the battery of any one of claim 1 to claim 5, the manufacturing method comprising:
an opening process of moving the jutting-out portions of the external cladding in directions to separate from each other and widening the end portions;
an electrode assembly insertion process of inserting the electrode assembly into the external cladding that has the end portions widened;
a lid insertion process of inserting the lid into the end portions of the external cladding that has the electrode assembly inserted therein; and
a sealing process of moving the jutting-out portions in a direction to approach each other to clamp the narrow width portion of the lid with the jutting-out portions, and sealing the end portions of the external cladding.
